# EUROPEAN PATENT SPECIFICATION

(11) **EP 2 434 699 B1**
(45) Date of publication and mention of the grant of the patent: **02.11.2016**
(21) Application number: 09844809.5
(22) Date of filing: 23.09.2009
(51) Int. Cl.: H04L 12/70, H04L 12/701, H04L 12/723

(54) **METHOD AND APPARATUS FOR TRANSMITTING AND PROCESSING EXTENDED REMOTE DEFECTION IDENTIFICATION MESSAGE AND EXTENDED BACKWARD DEFECTION IDENTIFICATION MESSAGE**
VERFAHREN UND VORRICHTUNG ZUM SENDEN UND VERARBEITEN DER ERWEITERTEN FERNDEFEKTIONSIDENTIFIKATIONSNACHRICHT UND ERWEITERTEN RÜCKWÄRTSDEFEKTIONSIDENTIFIKATIONSNACHRICHT
PROCÉDÉ ET APPAREIL D'ENVOI ET DE TRAITEMENT DE MESSAGE D'IDENTIFICATION DE DÉFAUT DISTANT ÉTENDU ET DE MESSAGE D'IDENTIFICATION DE DÉFAUT ARRIÈRE ÉTENDU

(30) Priority: 19.05.2009 CN 200910084867
(43) Date of publication of application: 28.03.2012
(73) Proprietor: ZTE Corporation, Shenzhen, Guangdong 518057 (CN)
(72) Inventor: LIU,Guoman, Guangdong 518057 (CN)
(74) Representative: Mozzi, Matteo
(86) International application number: PCT/CN2009/074153
(87) International publication number: WO 2010/133057

(56) References cited:
- EP-A1- 1 742 420
- WO-A1-2007/066910
- WO-A2-2009/037681
- CN-A- 1 838 620
- CN-A- 1 848 756
- US-A1- 2007 133 564
- US-A1- 2007 133 564

## Description

### Field of the Invention

The present invention relates to the technical field of operation administration and maintenance (OAM) in the multi-protocol label switching (MPLS) network, and in particular to methods and apparatus for transmitting and processing an extended remote defection identification (RDI) message and an extended backward defection identification (BDI) message.

### Background of the Invention

With the continuous increasing of IP-based telecommunication services and data services, the traditional synchronous digital hierarchy (SDH) circuit switching technology has big problems in both the aspect of utilization ratio of channel resources and the aspect of suddenness and flexibility of dealing with the services. As a result, there is a need of transition from the SDH circuit switching technology to packet transfer technologies such as multi-protocol label switching (MPLS). However, the current MPLS network, though having made a great progress in the suddenness and the flexibility of dealing with the services, is not perfect in the aspect of the operation administration and maintenance (OAM) function, and some new OAM functions such as link performance (comprising packet loss ratio of link, delay and jitter) measurement, clock synchronization, client end defection identification and feedback are usually needed to be added.

In conventional art, new OAM functions are often added by designing a new type of OAM messages. For instance, a remote defection identification (RDI) message and a backward defection identification (BDI) message act as OAM messages for realizing functions of defection identification and feedback of a client end. However, with the continuous expansion of the MPLS functions, the OAM functions supported thereby also increase correspondingly, thus resulting in appearance of a large number of new OAM message types, which is unfavorable for compatibility and interoperability between new devices and old devices; and in addition, appearance of the large number of OAM message types may also lead to the big transmission overhead of a transmission path and reduce the transmission efficiency of the services.

The US Patent Application US2007/133564 A1 discloses a method for propagating a maintenance signal that can notify an Ethernet layer as well as a VPWS, which is a multi-protocol label switching (MPLS) layer, that a defect has occurred when the defect occurs in a virtual private wire service (VPWS) network using synchronous digital hierarchy (SDH)/synchronous optical network (SONET) as a physical layer.

The International Patent Application WO2007/066910A1 discloses a system and method for multi-protocol label switching (MPLS) label-switched path (LSP) protection switching in an MPLS system employing a working LSP and a protection LSP in a 1:1 mode.

The European Patent Application EP 1742420 A1 provides a failure management method and apparatus for interworking Ethernet and multiple protocol label switch network.

The International Patent Application WO2009/037681 A2 discloses a solution for RSVP-TE enhancement for MPLS FRR bandwidth optimization.

### Summary of the Invention

In view of this, the present invention provides methods and apparatus for transmitting and processing an extended BDI message to solve the problem of poor compatibility and interoperability of devices and a big transmission overhead caused by the expansion of OAM functions in the conventional art.

The technical solutions of the present invention are accomplished as follows.

The present invention provides a method for transmitting and processing an extended RDI message. The method comprises:
an end node on a multi-protocol label switching MPLS transmission path generating an extended RDI message according to requirements, and transmitting the extended RDI message along the MPLS transmission path according to a path identifier ID corresponding to the extended RDI message; and
when determining that the extended RDI message needs to be processed, a node on the MPLS transmission path that has received the extended RDI message identifying a type length value TLV message contained in the extended RDI message, and analyzing and processing an identifiable TLV message.

The present invention provides a method for transmitting and processing an extended BDI message. The method comprises:
an end node on a multi-protocol label switching MPLS transmission path generating an extended BDI message according to requirements, and transmitting the extended BDI message along the MPLS transmission path according to a path identifier ID corresponding to the extended BDI message; and
when determining that the extended BDI message needs to be processed, a node on the MPLS transmission path that has received the extended BDI message identifying a type length value TLV message contained in the extended BDI message, and analyzing and processing an identifiable TLV message.

The step of the end node generating the extended BDI message according to requirements comprises:
the end node encapsulating required operation administration and maintenance OAM function information by a TLV mode to obtain a TLV message, and encapsulating one or more TLV messages having a same processing node into a same extended BDI message.

The method comprises: the node that has received the extended BDI message judging whether the received extended BDI message needs to be processed, which specifically comprises: reducing a value of a time to live TTL field on an outer layer forwarding label of the extended BDI message by 1, wherein it is determined that the extended BDI message needs to be processed if the value of the TTL field after the reduction is 1, and it is determined that the extended BDI message does not need to be processed if the value of the TTL field after the reduction is not 0; or
matching address information of a processing node carried by the extended BDI message with address information of the node that has received the extended BDI message, wherein it is determined that the extended BDI message needs to be processed if the address information of the processing node carried by the extended BDI message and the address information of the node that has received the extended BDI message are consistent, and it is determined that the extended BDI message does not need to be processed if the address information of the processing node carried by the extended BDI message and the address information of the node having received the BDI extended message are inconsistent.

When the node that has received the extended BDI message determines that the extended BDI message does not need to be processed, the method further comprises: the node forwarding the extended BDI message along the MPLS transmission path to a next node adjacent to the node.

The step of identifying the TLV message in the extended BDI message comprises:
matching a Type field in the TLV message with a Type field stored by the node, wherein if the type field in the TLV message and the Type field stored by the node can be matched, the node is capable of identifying the TLV message; and if the type field in the TLV message and the Type field stored by the node cannot be matched, the node is incapable of identifying the TLV message, and the TLV message incapable of being identified is discarded..

The present invention also provides an apparatus for transmitting and processing an extended RDI message. The apparatus comprises a message processing module and a TLV analyzing and processing module, wherein
the message processing module is configured to receive an extended RDI message generated by an end node, judge whether the extended RDI message needs to be processed, and provide the extended RDI message to the TLV analyzing and processing module when it is determined that the extended RDI message needs to be processed, and
the TLV analyzing and processing module is configured to identify a TLV message in the extended RDI message, and analyze and process an identifiable TLV message.

The present invention also provides an apparatus for transmitting and processing an extended BDI message. The apparatus comprises a message processing module and a TLV analyzing and processing module, wherein
the message processing module is configured to receive an extended BDI message generated by an end node, judge whether the extended BDI message needs to be processed, and provide the extended BDI message to the TLV analyzing and processing module when it is determined that the extended BDI message needs to be processed; and
the TLV analyzing and processing module is configured to identify a TLV message in the extended BDI message, and analyze and process an identifiable TLV message.

The apparatus further comprises: a message generating module, configured to generate the extended BDI message according to requirements and provide the extended BDI message to the message processing module; and
the message processing module is further configured to transmit the extended BDI message along an MPLS transmission path according to a path ID corresponding to the extended BDI message.

The message processing module is also configured to forward the extended BDI message along the MPLS transmission path when determining that the extended BDI message received does not need to be processed; and the TLV analyzing and processing module is further configured to discard an unidentifiable TLV message when the TLV message cannot be identified.

In the methods and apparatus for transmitting and processing an extended RDI message and an extended BDI message provided by the present invention, some newly added OAM function information is encapsulated in the extended RDI message or the extended BDI message in a form of type length value (TLV) and is transmitted on the MPLS transmission path, which not only can inform an opposite-end node on the MPLS transmission path of defection information via the extended RDI message or the extended BDI message, but also can perform newly added OAM functions such as link performance measurement and clock synchronization, thereby avoiding a need of independently adding a new OAM message, assuring compatibility and interoperability with an original MPLS device, and also avoiding a problem of erroneous processing resulted from incapability of identifying such a new OAM message by the original MPLS device.

Besides, a plurality of TLV messages having a same processing node can be encapsulated in a same extended RDI message or a same extended BDI message by encapsulating the new OAM function information in a TLV encapsulating mode, which can reduce the number of transmissions of the OAM messages and improve the efficiency of link transmission.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of a data structure of a TLV message;
Fig. 2 is a schematic diagram of a data structure of an extended BDI message of the present invention;
Fig. 3 is a flowchart of a method for transmitting and processing an extended RDI message of the present invention;
Fig. 4 is a flowchart of a method for transmitting and processing an extended BDI message of the present invention;
Fig. 5 is a schematic diagram of an MPLS transmission path;
Fig. 6 is a flowchart of a method for transmitting and processing an extended BDI message in one embodiment of the present invention; and
Fig. 7 is a schematic diagram of a structure of an apparatus for transmitting and processing an extended BDI message of the present invention.

### Detailed Description of Embodiments

The technical solutions of the present invention will be illustrated in detail hereinafter in conjunction with the drawings and exemplary embodiments.

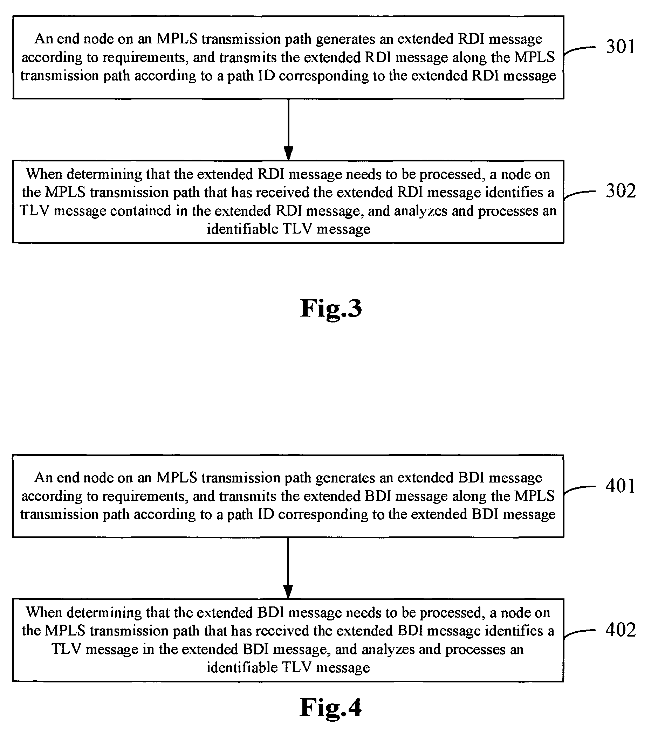

A method for transmitting and processing an extended RDI message provided by the present invention is as shown in Fig. 3, and mainly comprises the following steps:
Step 301, an end node on an MPLS transmission path generating an extended RDI message according to requirements, and transmitting the extended RDI message along the MPLS transmission path according to a path ID corresponding to the extended RDI message; and
Step 302, when determining that the extended RDI message needs to be processed, a node on the MPLS transmission path that has received the extended RDI message identifying a TLV message contained in the extended RDI message, and analyzing and processing an identifiable TLV message.

In the present embodiment, some newly added OAM function information is encapsulated in the extended RDI message in a type length value (TLV) format and is transmitted on the MPLS transmission path, which not only can inform an opposite-end node on the MPLS transmission path of the defection information via the extended RDI message, but also can perform newly added OAM functions such as link performance measurement and clock synchronization, thereby avoiding a need of independently adding new OAM messages, assuring compatibility and interoperability with an original MPLS device, and also avoiding a problem of erroneous processing resulted from incapability of identifying such new OAM messages by the original MPLS device; and besides, a plurality of TLV messages having a same processing node can be encapsulated into a same extended RDI message by encapsulating the new OAM function information in a TLV packaging mode, which can reduce the number of transmissions of the OAM messages and improve the efficiency of link transmission.

The RDI message is a two-way message and supports a two-way processing function, while a traditional BDI message is a one-way message and merely supports a one-way processing function. As the inventive concept of the present embodiment is applicable to both two-way RDI messages and traditional one-way BDI messages, the following exemplary embodiments mainly take the traditional BDI as an example for the sake of convenience, and the traditional BDI messages in various exemplary embodiments also can be correspondingly extended to be RDI messages.

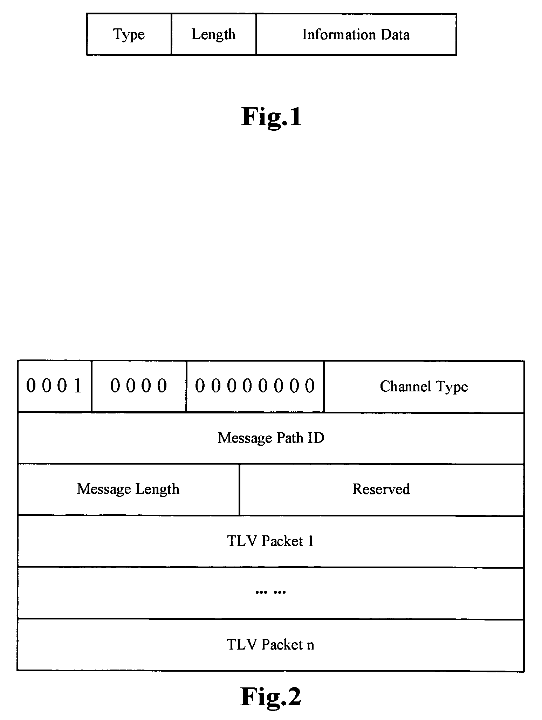

In the present invention, the existing BDI message is extended, and some newly added OAM functions are accomplished by the extended BDI message. Specifically, a certain piece of newly added OAM function information is encapsulated in a TLV mode to constitute a TLV message consisting of three fields, namely, type, length and information data, as shown in Fig. 1, a schematic diagram of a data structure of the TLV message; and then, one or more TLV messages having a same processing node are encapsulated into a same extended BDI message. Fig. 2 is a schematic diagram of a data structure of the extended BDI message according to the embodiments of the present invention, wherein TLV packet 1 to TLV packet n are n TLV messages, and the n TLV messages have a same processing node. To put it simply, one MPLS transmission path is corresponding to one path identifier (ID), one path ID is corresponding to one BDI message, and all OAM functions in this BDI message can be processed on nodes of the MPLS transmission path.

A method for transmitting and processing an extended BDI message provided in the present invention is as shown in Fig. 4, and mainly comprises the following steps 401 to 402.

Step 401, an end node on an MPLS transmission path generates an extended BDI message according to requirements, and transmits the extended BDI message along the MPLS transmission path according to a path ID corresponding to the extended BDI message.

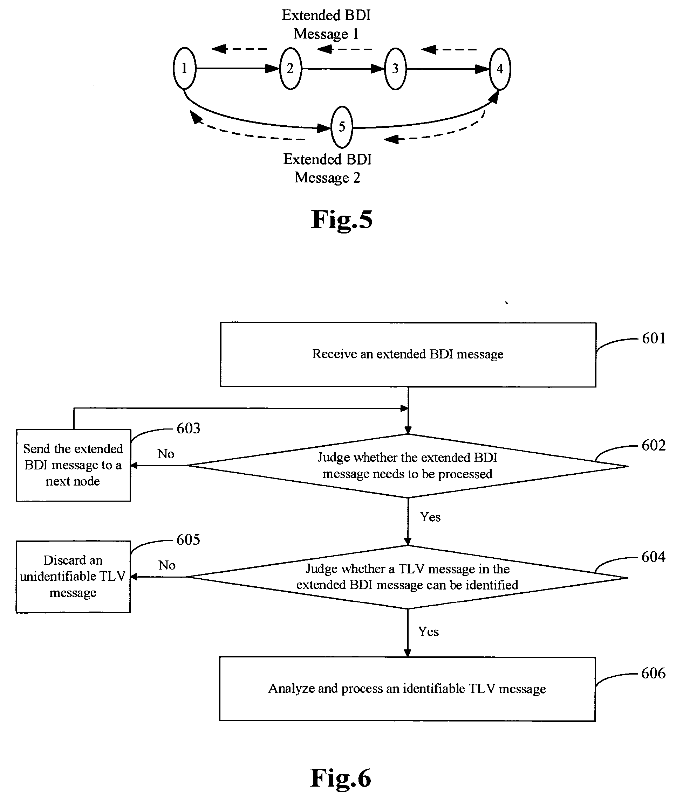

It should be indicated that in the present invention, only the end node on the MPLS transmission path can generate an extended BDI message, while an intermediate node on the MPLS transmission path cannot generate the extended BDI message but can receive the extended BDI message and perform corresponding processing. For example, on an MPLS transmission path shown in Fig. 5, on one MPLS transmission path formed by node 1, node 2, node 3 and node 4, the node 1 and the node 4 are end nodes, and the node 2 and the node 3 are intermediate nodes. The node 1 can generate the extended BDI message according to requirements, and sends the generated extended BDI message along a path of node 1→node 2→node 3→node 4; and the node 4 can also generate an extended BDI message according to requirements, and sends the generated extended BDI message along a path of node 4→node 3→node 2→node 1. The node 2 and the node 3 do not have the function of generating the extended BDI message and are used to receive the extended BDI message on the MPLS transmission path and perform corresponding processing.

However, the end node has the function of processing the extended BDI message. For instance, on the MPLS transmission path shown in Fig. 5, the node 1 can process an extended BDI message forwarded by the node 2; and similarly, the node 4 can also process an extended BDI message forwarded by the node 3.

Specific operations of the end node generating the extended BDI message according to requirements are as follows: the end node encapsulating required OAM function information in a type length value (TLV) mode to obtain a TLV message; and then, encapsulating one or more TLV messages having a same processing node into a same extended BDI message. The so-called one or more TLV messages having a same processing node means that nodes that finally need to process these TLV messages are the same. For example, the node 1 generates a TLV message A and designates that the processing node of this message is the node 4, and the node 1 generates a TLV message B and designates that the processing node of this message is also the node 4, then, the TLV messages A and B can be encapsulated into one BDI message; and if the node 1 generates a TLV message C and designates that the processing node of this message is the node 4, and the node 1 generates a TLV message D and designates that the processing node of this message is the node 3, the TLV messages C and D cannot be encapsulated into one BDI message.

Step 402, when determining that the extended BDI message needs to be processed, a node on the MPLS transmission path that has received the extended BDI message identifies a TLV message in the extended BDI message, and analyzes and processes an identifiable TLV message.

The node on the MPLS transmission path that has received the extended BDI message firstly needs to judge whether the received extended BDI message needs to be processed. A specific operation thereof is as follows:
reducing a value of a time to live (TTL) field on an outer layer forwarding label of the extended BDI message by 1, wherein it is determined that the extended BDI message needs to be processed if the value of the TTL field after the reduction is 1, and it is determined that the extended BDI message does not need to be processed if the value of the TTL field after the reduction is not 0; or
matching address information of a processing node carried by the extended BDI message with address information of the node that has received the extended BDI message, wherein it is determined that the extended BDI message needs to be processed if the address information of the processing node carried by the extended BDI message and the address information of the node that has received the extended BDI message are consistent, and it is determined that the extended BDI message does not need to be processed if the address information of the processing node carried by the extended BDI message and the address information of the node having received the BDI extended message are inconsistent.

The node having received the extended BDI message forwards the extended BDI message received to a next node adjacent to the node along the MPLS transmission path when determining that the extended BDI message does not need to be processed. For example, on the MPLS transmission path shown in Fig. 5, the node 3 receives an extended BDI message 1 from the node 4, and forwards the extended BDI message 1 to a next node adjacent to the node 3, *i.e.,* the node 2, along the path of node 4→node 3→node 2→node 1 when determining that the extended BDI message 1 does not need to be processed.

The node having received the extended BDI message continues to identify the TLV message in the extended BDI message when determining that the extended BDI message needs to be processed A specific operation thereof is as follows.

A Type field in the TLV message is matched with a Type field stored by the node. If they can be matched, the TLV message can be identified, and if they cannot be matched, the TLV message cannot be identified.

If a TLV message can be identified, the identifiable TLV message is analyzed and processed; and if a TLV message cannot be identified, the unidentifiable TLV message is discarded.

It can be seen that on one MPLS transmission path, it is only the end nodes that can generate the extended BDI message, while both intermediate nodes and end nodes can receive and process the extended BDI message. Corresponding processing operations performed by any node having received the extended BDI message will be illustrated in detail hereinafter in conjunction with the MPLS transmission path shown in Fig. 5, as shown in Fig. 6, the operations mainly comprises the following steps 601 to 606.

Step 601, an extended BDI message is received from an MPLS transmission path.

In the schematic diagram of an MPLS transmission path shown in Fig. 5, on a transmission path of node 1→node 2→node 3→node 4, the node 1 and the node 4 are end nodes, and the node 2 and the node 3 are intermediate nodes; and on a path of node 1→node 5→node 4, the node 1 and the node 4 are end nodes, and the node 5 is intermediate node. The node 4 generates an extended BDI message 1 corresponding to the path of node 1→node 2→node 3→node 4 according to requirements, and generates an extended BDI message 2 corresponding to the path of node 1→node 5→node 4 according to requirements. Path IDs corresponding to the extended BDI message 1 and the extended BDI message 2 are different based on different MPLS transmission paths. Accordingly, the end node 4 sends according to the path IDs corresponding to the extended BDI messages,, the extended BDI message 1 to the node 3 and the extended BDI message 2 to the node 5.

Step 602, a node having received the extended BDI message judges whether the extended BDI message needs to be processed, wherein if it is determined to be "no", Step 603 is performed, and if it is determined to be "yes", Step 604 is performed

Step 603, the extended BDI message is forwarded to a next node adjacent to this node along the MPLS transmission path, and the next node continues to perform the operation of Step 602.

The node having received the extended BDI message needs to judge whether it needs to process the message. For instance, the node 3 in Fig. 5, after having received the extended BDI message 1, needs to judge whether it needs to process the extended BDI message 1. Specifically, after a value of a TTL field in the extended BDI message is reduced by 1, if the value of the field is 0, it means that the current node needs to process the extended BDI message and Step 604 is performed; and if the value of the field is not 0, the current node does not need to process the extended BDI message and Step 603 is performed Of course, whether the received extended BDI message needs to be processed can also be judged in a manner of matching the address information as mentioned above, and unnecessary details will not be given herein.

It should be indicated that the value of the TTL field is associated with the MPLS transmission path corresponding to the extended BDI message. For instance, when the end node 4 generates the extended BDI message 1, the value of the TTL field is initialized to be 3 according to the path of node 1→node 2→node 3→node 4; after the node 3 has received the extended BDI message 1, the value of the TTL field is reduced by 1, *i.e.,* 3-1=2, therefore, the node 3 does not need to process the extended BDI message 1 and only needs to forward the extended BDI message 1 to the node 2 according to the path ID. Processing of the node 2 after having received the extended BDI message 1 is the same as that of the node 3, and unnecessary details will not be given herein. However, attention should be drawn that the value of the TTL field is 2 when the node 2 receives the extended BDI message; thus, the node 2 still does not need to process the extended BDI message 1. The node 2 continues to send the extended BDI message 1 to the node 1. At this time, the value of the TTL field in the extended BDI message 1 is 1; therefore the node 1 reduces the value of the TTL field by 1, *i.e.,* 1-1=0, which means that the node 1 needs to process the extended BDI message 1 and Step 604 is performed.

Step 604, whether the TLV message in the extended BDI message can be identified is judged, wherein if it is determined to be "no", Step 605 is performed; and if it is determined to be "yes", Step 606 is performed.

Step 605, an unidentifiable TLV message is discarded.

If the node having received the extendedBDI message needs to process the message, the TLV message in the extended BDI preferably needs to be identified, and specifically being identified based on a Type field in the TLV message. If a value of the Type field can be matched with a value of a Type field stored by the current node, the current node can identify the TLV message, and Step 606 is performed; and if they cannot be matched, the current node cannot identify the TLV message, and this TLV message is directly discarded.

Step 606, an identifiable TLV message is analyzed and processed.

The current node analyzes the identifiable TLV message in the extended BDI message. If the identifiable TLV message is a TLV message for performing a performance test such as delay, packet loss ratio or jitter the current node performs corresponding performance test; if the identifiable TLV message is a TLV message for clock synchronization, the current node performs clock signal tracing and adjustment; if the identifiable TLV message is a TLV message for defection information notification, the current node performs corresponding channel protection; and if the identifiable TLV message is a TLV message for a test and etc., the current node carries out corresponding test information processing. Of course, the extended BDI message may also comprises TLV messages of other OAM functions, and unnecessary details will not be given herein.

In order to accomplish the method for transmitting and processing the extended RDI message in the present invention, the present invention also provides an apparatus for transmitting and processing an extended RDI message for application to nodes in an MPLS path. The apparatus comprises a message processing module and a TLV analyzing and processing module, wherein the message processing module is configured to receive an extended RDI message generated by an end node, judge whether the extended RDI message needs to be processed, and provide the extended RDI message to the TLV analyzing and processing module if the extended RDI message needs to be processed; and the TLV analyzing and processing module is configured to identify a TLV message in the extended RDI message, and analyze and process an identifiable TLV message.

The RDI message is a two-way message and supports a two-way processing function, while a traditional BDI message is a one-way message and merely supports a one-way processing function. As the inventive concept of the present embodiment is applicable to both two-way RDI message and traditional one-way BDI message, the following exemplary embodiments mainly take the traditional BDI as an example for the sake of convenience, and the traditional BDI messages in various exemplary embodiments also can be correspondingly extended to be RDI messages.

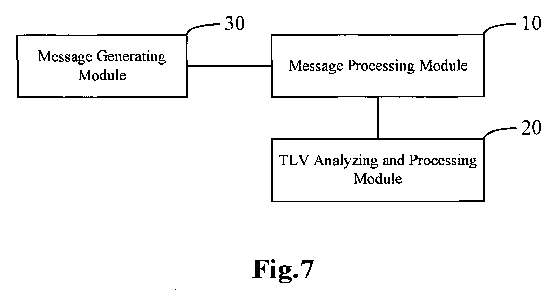

In order to accomplish the above method for transmitting and processing an extended BDI message in the present invention, the present invention also provides an apparatus for transmitting and processing an extended BDI message for application to nodes in an MPLS path. As shown in Fig. 7, the apparatus comprises a message processing module 10 and a TLV analyzing and processing module 20, wherein the message processing module 10 is configured to receive an extended BDI message generated by an end node, judge whether the extended BDI message needs to be processed, and provide the extended BDI message to the TLV analyzing and processing module 20 if the extended BDI message needs to be processed; and the TLV analyzing and processing module 20 is configured to identify a TLV message in the extended BDI message, and analyze and process an identifiable TLV message.

Preferably, if the apparatus is applied to an end node on the MPLS path, in addition to the above modules, the apparatus also comprises: a message generating module 30, configured to generate an extended BDI message according to requirements and provide the same to the message processing module 10; and correspondingly, the message processing module 10 is also configured to send the extended BDI message along the MPLS transmission path according to a path ID corresponding to the extended BDI message.

Besides, the message processing module 10 is also configured to forward the extended BDI message along the MPLS transmission path when determining that the received extended BDI message does not need to be processed. The TLV analyzing and processing module 20 is also configured to discard the TLV message when the TLV message cannot be identified.

It can be seen that there are usually two end nodes and several intermediate nodes in one MPLS transmission path, it is only the end nodes that have the function of generating the extended BDI message, and the intermediate nodes only can receive, process and forward the extended BDI message; and in addition, the end node can also receive the extended BDI message and process the same, in this situation, the end node comprises
the message processing module 10, the TLV analyzing and processing module 20 and the message generating module 30 as mentioned above.

According to the above descriptions, it can be seen that in the above embodiments of the present invention, not only the compatibility and interoperability of a multi-protocol label switching (MPLS) device are assured, but also the transmission efficiency of a link is improved.

Obviously, those skilled in the art shall understand that individual modules and individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several means or steps in to a single IC. Thus, the present invention is not limited to any particular combination of hardware and software.

## Claims

1. A method for transmitting and processing an extended backward defection identification BDI message or an extended RDI message, **characterized by** the method comprising:
an end node on a multi-protocol label switching MPLS transmission path generating an extended BDI message or an extended RDI message according to requirements, and transmitting the extended BDI message or the extended RDI message along the MPLS transmission path according to a path identifier ID corresponding to the extended BDI message or the extended RDI message; and
when determining that the extended BDI message or the extended RDI message needs to be processed, a node on the MPLS transmission path that has received the extended BDI message or the extended RDI message identifying a type length value TLV message contained in the extended BDI message or the extended RDI message, and analyzing and processing an identifiable TLV message;
wherein the step of the end node generating the extended BDI message or an or the extended RDI message according to requirements comprises:
the end node encapsulating required operation administration and maintenance OAM function information by a TLV mode to obtain a TLV message, and encapsulating one or more TLV messages having a same processing node into a same extended BDI message or a same extended RDI message.

2. The method for transmitting and processing an extended BDI message according to Claim 1, **characterized in that** the method further comprises: the node that has received the extended BDI message judging whether the received extended BDI message needs to be processed, which specifically comprises: reducing a value of a time to live TTL field on an outer layer forwarding label of the extended BDI message by 1, wherein it is determined that the extended BDI message needs to be processed if the value of the TTL field after the reduction is 1, and it is determined that the extended BDI message does not need to be processed if the value of the TTL field after the reduction is not 0; or
matching address information of a processing node carried by the extended BDI message with address information of the node that has received the extended BDI message, wherein it is determined that the extended BDI message needs to be processed if the address information of the processing node carried by the extended BDI message and the address information of the node that has received the extended BDI message are consistent, and it is determined that the extended BDI message does not need to be processed if the address information of the processing node carried by the extended BDI message and the address information of the node having received the BDI extended message are inconsistent.

3. The method for transmitting and processing an extended BDI message according to Claim 2, **characterized in that**, when the node that has received the extended BDI message determines that the extended BDI message does not need to be processed, the method further comprises: the node forwarding the extended BDI message along the MPLS transmission path to a next node adjacent to the node.

4. The method for transmitting and processing an extended BDI message according to Claim 1, **characterized in that** the step of identifying the TLV message in the extended BDI message comprises:
matching a Type field in the TLV message with a Type field stored by the node, wherein if the type field in the TLV message and the Type field stored by the node can be matched, the node is capable of identifying the TLV message; and if the type field in the TLV message and the Type field stored by the node cannot be matched, the node is incapable of identifying the TLV message, and the TLV message incapable of being identified is discarded.

5. An apparatus for transmitting and processing an extended BDI message or an extended RDI message, **characterized by** the apparatus comprising a message processing module (10) and a TLV analyzing and processing module (20), wherein
the message processing module (10) is configured to receive an extended BDI message or an extended RDI message generated by an end node, judge whether the extended BDI message or the extended RDI message needs to be processed, and provide the extended BDI message or the extended RDI message to the TLV analyzing and processing module (20) when it is determined that the extended BDI message or the extended RDI message needs to be processed; and
the TLV analyzing and processing module (20) is configured to identify a TLV message in the extended BDI message or the extended RDI message, and analyze and process an identifiable TLV message;
wherein required operation administration and maintenance OAM function information is encapsulated in the extended RDI message or the extended BDI message in a form of TLV.

6. The apparatus for transmitting and processing an extended BDI message according to Claim 5, **characterized in that** the apparatus further comprises: a message generating module (30), configured to generate the extended BDI message according to requirements and provide the extended BDI message to the message processing module (10); and
the message processing module (10) is further configured to transmit the extended BDI message along an MPLS transmission path according to a path ID corresponding to the extended BDI message.

7. The apparatus for transmitting and processing an extended BDI message according to Claim 5 or 6, **characterized in that** the message processing module (10) is further configured to forward the extended BDI message along the MPLS transmission path when determining that the extended BDI message received does not need to be processed; and the TLV analyzing and processing module (20) is further configured to discard an unidentifiable TLV message when the TLV message cannot be identified.

## Patentansprüche

1. Verfahren zum Übertragen und Verarbeiten einer erweiterten Nachricht zur Rückwärtsdefektionsidentifizierung BDI oder einer erweiterten RDI-Nachricht, **dadurch gekennzeichnet, dass** das Verfahren umfasst:
ein Erzeugen einer erweiterten BDI-Nachricht oder einer erweiterten RDI-Nachricht gemäß den Anforderungen an einem Multi-Protokoll-Label-Switching- MPLS-Übertragungspfad und Übertragen der erweiterten BDI-Nachricht oder der erweiterten RDI-Nachricht entlang des MPLS-Übertragungspfads gemäß einer Pfadidentifikation ID, welche zu der erweiterten BDI-Nachricht oder der erweiterten RDI-Nachricht korrespondiert, durch einen Endknoten; und
bei Bestimmung, dass die erweiterte BDI-Nachricht oder die erweiterte RDI-Nachricht verarbeitet werden muss, ein Identifizieren einer Typenlängenwert- TLV-Nachricht, die in der erweiterten BDI-Nachricht oder der erweiterten RDI-Nachricht enthalten ist, und ein Analysieren und Verarbeiten einer identifizierbaren TLV-Nachricht durch einen Knoten an dem MPLS-Übertragungspfad, der die erweiterte BDI-Nachricht oder die erweiterte RDI-Nachricht erhalten hat;
wobei der Schritt, in welchem der Endknoten die erweiterte BDI-Nachricht oder eine oder die erweiterte RDI-Nachricht gemäß den Anforderungen erzeugt, umfasst:
ein Verkapseln benötigter Betriebsadministrations- und Wartungs- OAM- Funktionsinformationen durch einen TLV-Modus, um eine TLV-Nachricht zu erhalten, durch den Endknoten, und ein Verkapseln einer oder mehrerer TLV-Nachrichten, welche einen gleichen Verarbeitungsknoten aufweisen, in eine gleiche erweiterte BDI-Nachricht oder eine gleiche erweiterte RDI-Nachricht.

2. Verfahren zum Übertragen und Verarbeiten einer erweiterten BDI-Nachricht nach Anspruch 1, **dadurch gekennzeichnet, dass** das Verfahren ferner umfasst: ein Bewerten, ob die erhaltene erweiterte BDI-Nachricht verarbeitet werden muss, durch den Knoten, welcher die erweiterte BDI-Nachricht erhalten hat, welches speziell umfasst:
ein Reduzieren eines Wertes eines Lebenszeit- TTL-Felds an einem äußeren Schichtweiterleitungslabel der erweiterten BDI-Nachricht um 1, wobei bestimmt wird, dass die erweiterte BDI-Nachricht verarbeitet werden muss, wenn der Wert des TTL-Felds nach der Reduzierung 1 ist, und bestimmt wird, dass die erweiterte BDI-Nachricht nicht verarbeitet werden muss, wenn der Wert des TTL-Felds nach der Reduzierung nicht 0 ist; oder
ein Abgleichen von Adressinformationen eines Verarbeitungs-knotens, welche durch die erweiterte BDI-Nachricht mitgeführt werden, mit Adressinformationen des Knotens, welcher die erweiterte BDI-Nachricht erhalten hat, wobei bestimmt wird, dass die erweiterte BDI-Nachricht verarbeitet werden muss, wenn die Adressinformationen des Verarbeitungsknotens, welche durch die erweiterte BDI-Nachricht mitgeführt werden, und die Adressinformationen des Knotens, welcher die erweiterte BDI-Nachricht erhalten hat, konsistent sind, und bestimmt wird, dass die erweiterte BDI-Nachricht nicht verarbeitet werden muss, wenn die Adressinformationen des Verarbeitungs-knotens, welche durch die erweiterte BDI-Nachricht mitgeführt werden, und die Adressinformationen des Knotens, welcher die erweiterte BDI-Nachricht erhalten hat, nicht konsistent sind.

3. Verfahren zum Übertragen und Verarbeiten einer erweiterten BDI-Nachricht nach Anspruch 2, **dadurch gekennzeichnet, dass**, wenn der Knoten, welcher die erweiterte BDI-Nachricht erhalten hat, bestimmt, dass die erweiterte BDI-Nachricht nicht verarbeitet werden muss, das Verfahren ferner umfasst: ein Weiterleiten der erweiterten BDI-Nachricht durch den Knoten entlang des MPLS-Übertragungspfads zu einem nächsten Knoten, welcher zu dem Knoten benachbart ist.

4. Verfahren zum Übertragen und Verarbeiten einer erweiterten BDI-Nachricht nach Anspruch 1, **dadurch gekennzeichnet, dass** der Schritt des Identifizierens der TLV-Nachricht in der erweiterten BDI-Nachricht umfasst:
ein Abgleichen eines Typenfelds in der TLV-Nachricht mit einem Typenfeld, welches durch den Knoten gespeichert ist, wobei, wenn das Typenfeld in der TLV-Nachricht und das Typenfeld, welches durch den Knoten gespeichert ist, abgeglichen werden können, der Knoten die TLV-Nachricht identifizieren kann; und, wenn das Typenfeld in der TLV-Nachricht und das Typenfeld, welches durch den Knoten gespeichert ist, nicht abgeglichen werden können, der Knoten die TLV-Nachricht nicht identifizieren kann, und die nicht zu identifizierende TLV-Nachricht verworfen wird.

5. Vorrichtung zum Übertragen und Verarbeiten einer erweiterten BDI-Nachricht oder einer erweiterten RDI-Nachricht, **dadurch gekennzeichnet, dass** die Vorrichtung ein Nachrichtenverarbeitungs-modul (10) und ein TLV-Analyse- und Verarbeitungsmodul (20) umfasst, wobei
das Nachrichtenverarbeitungsmodul (10) dazu eingerichtet ist, eine erweiterte BDI-Nachricht oder eine erweiterte RDI-Nachricht, welche durch einen Endknoten erzeugt worden ist, zu erhalten, zu bewerten, ob die erweiterte BDI-Nachricht oder die erweiterte RDI-Nachricht verarbeitet werden muss, und die erweiterte BDI-Nachricht oder die erweiterte RDI-Nachricht dem TLV-Analyse- und Verarbeitungsmodul (20) bereitzustellen, wenn bestimmt wird, dass die erweiterte BDI-Nachricht oder die erweiterte RDI-Nachricht verarbeitet werden muss; und
das TLV-Analyse- und Verarbeitungsmodul (20) dazu eingerichtet ist, eine TLV-Nachricht in der erweiterten BDI-Nachricht oder der erweiterten RDI-Nachricht zu identifizieren und eine identifizierbare TLV-Nachricht zu analysieren und zu verarbeiten;
wobei benötigte Betriebsadministration- und Wartungs- OAM-Funktionsinformationen in der erweiterten RDI-Nachricht oder der erweiterten BDI-Nachricht in einer Form eines TLV verkapselt sind.

6. Vorrichtung zum Übertragen und Verarbeiten einer erweiterten BDI-Nachricht nach Anspruch 5, **dadurch gekennzeichnet, dass** die Vorrichtung ferner umfasst: ein Nachrichtenerzeugungsmodul (30), welches dazu eingerichtet ist, die erweiterte BDI-Nachricht gemäß den Anforderungen zu erzeugen und die erweiterte BDI-Nachricht dem Nachrichtenverarbeitungsmodul (10) bereitzustellen; und
das Nachrichtenverarbeitungsmodul (10) ferner dazu eingerichtet ist, die erweiterte BDI-Nachricht entlang eines MPLS-Übertragungspfads gemäß einer Pfad-ID, welche mit der erweiterten BDI-Nachricht korrespondiert, zu übertragen.

7. Vorrichtung zum Übertragen und Verarbeiten einer erweiterten BDI-Nachricht nach Anspruch 5 oder 6, **dadurch gekennzeichnet, dass** das Nachrichtenverarbeitungsmodul (10) ferner dazu eingerichtet ist, die erweiterte BDI-Nachricht entlang des MPLS-Übertragungspfads zu übertragen, wenn bestimmt ist, dass die erhaltene erweiterte BDI-Nachricht nicht verarbeitet werden muss; und wobei das TLV-Analyse-und Verarbeitungsmodul (20) ferner dazu eingerichtet ist, eine nicht identifizierbare TLV-Nachricht zu verwerfen, wenn die TLV-Nachricht nicht identifiziert werden kann.

## Revendications

1. Procédé de transmission et de traitement d'un message d'identification de défaut distant, BDI, étendu ou d'un message de RDI étendu, **caractérisé en ce que** le procédé comprend les étapes suivantes :
un noeud d'extrémité sur un trajet de transmission à commutation multiprotocole avec étiquette, MPLS, génère un message de BDI étendu ou un message de RDI étendu conformément à des exigences, et transmet le message de BDI étendu ou le message de RDI étendu le long du trajet de transmission MPLS conformément à un identifiant, ID, de trajet correspondant au message de BDI étendu ou au message de RDI étendu ; et
lorsqu'il est déterminé que le message de BDI étendu ou le message de RDI étendu doivent être traités, un noeud sur le trajet de transmission MPLS qui a reçu le message de BDI étendu ou le message de RDI étendu identifie un message de valeur de longueur type, TLV, contenu dans le message de BDI étendu ou le message de RDI étendu, et analyse et traite un message de TLV identifiable ;
dans lequel l'étape de génération du message de BDI étendu ou d'un ou du message de RDI étendu par le noeud d'extrémité conformément à des exigences comprend les étapes suivantes :
le noeud d'extrémité encapsule des informations de fonction de gestion, d'exploitation et de maintenance, OAM, requises par un mode TLV de sorte à obtenir un message de TLV, et encapsule un ou plusieurs messages TLV ayant un même noeud de traitement dans un même message de BDI étendu ou un même message de RDI étendu.

2. Procédé de transmission et de traitement d'un message de BDI étendu selon la revendication 1, **caractérisé en ce que** le procédé comprend en outre l'étape suivante : le noeud qui a reçu le message de BDI étendu détermine si le message de BDI étendu reçu doit être traité, ou non, cette étape consistant de façon spécifique : à réduire une valeur d'un champ de durée de vie, TTL, d'une étiquette de transfert de couche extérieure du message de BDI étendu de 1, dans laquelle il est déterminé que le message de BDI étendu doit être traité si la valeur du champ TTL après la réduction est égale à 1, et il est déterminé que le message de BDI étendu ne doit pas être traité si la valeur du champ TTL après la réduction n'est pas égale à 0 ; ou
à mettre en correspondance des informations d'adresse d'un noeud de traitement contenues dans le message de BDI étendu avec des informations d'adresse du noeud qui a reçu le message de BDI étendu, dans laquelle il est déterminé que le message de BDI étendu doit être traité si les informations d'adresse du noeud de traitement contenues dans le message de BDI étendu et les informations d'adresse du noeud qui a reçu le message de BDI étendu sont cohérentes, et il est déterminé que le message de BDI étendu ne doit pas être traité si les informations d'adresse du noeud de traitement contenues dans le message de BDI étendu et les informations d'adresse du noeud qui a reçu le message de BDI étendu ne sont pas cohérentes.

3. Procédé de transmission et de traitement d'un message de BDI étendu selon la revendication 2, **caractérisé en ce que**, lorsque le noeud qui a reçu le message de BDI étendu détermine que le message de BDI étendu ne doit pas être traité, le procédé comprend en outre l'étape suivante : le noeud transfère le message de BDI étendu le long du trajet de transmission MPLS à un noeud suivant adjacent au noeud.

4. Procédé de transmission et de traitement d'un message de BDI étendu selon la revendication 1, **caractérisé en ce que** l'étape d'identification du message de TLV dans le message de BDI étendu consiste :
à mettre en correspondance un champ Type dans le message de TLV avec un champ Type mémorisé par le noeud, dans lequel si le champ Type dans le message de TLV et le champ Type mémorisé par le noeud peuvent être mis en correspondance, le noeud est apte à identifier le message de TLV ; et si le champ Type dans le message de TLV et le champ Type mémorisé par le noeud ne peuvent pas être mis en correspondance, le noeud n'est pas apte à identifier le message de TLV et le message de TLV ne pouvant pas être identifié est rejeté.

5. Appareil de transmission et de traitement d'un message de BDI étendu ou d'un message de RDI étendu, **caractérisé en ce que** l'appareil comprend un module de traitement de message (10) et un module d'analyse et de traitement de TLV (20), dans lequel
le module de traitement de message (10) est configuré pour recevoir un message de BDI étendu ou un message de RDI étendu générés par un noeud d'extrémité, déterminer si le message de BDI étendu ou le message de RDI étendu doivent être traités, et fournir le message de BDI étendu ou le message de RDI étendu au module d'analyse et de traitement de TLV (20) lorsqu'il est déterminé que le message de BDI étendu ou le message de RDI étendu doivent être traités ; et
le module d'analyse et de traitement de TLV (20) est configuré pour identifier un message de TLV dans le message de BDI étendu ou le message de RDI étendu, et pour analyser et traiter un message de TLV identifiable ;
dans lequel des informations de fonction de gestion, d'exploitation et de maintenance, OAM, sont encapsulées dans le message de BDI étendu ou le message de RDI étendu sous la forme d'une TLV.

6. Appareil de transmission et de traitement d'un message de BDI étendu selon la revendication 5, **caractérisé en ce que** l'appareil comprend en outre : un module de génération de message (30) configuré pour générer le message de BDI étendu conformément à des exigences et pour fournir le message de BDI étendu au module de traitement de message (10) ; et
le module de traitement de message (10) est configuré en outre pour transmettre le message de BDI étendu le long d'un trajet de transmission MPLS conformément à un ID de trajet correspondant au message de BDI étendu.

7. Appareil de transmission et de traitement d'un message de BDI étendu selon la revendication 5 ou 6, **caractérisé en ce que** le module de traitement de message (10) est configuré en outre pour transférer le message de BDI étendu le long du trajet de transmission MPLS lorsqu'il est déterminé que le message de BDI étendu reçu ne doit pas être traité ; et le module d'analyse et de traitement de TLV (20) est configuré en outre pour rejeter un message de TLV non identifiable lorsque le message de TLV ne peut pas être identifié.
